# EUROPÄISCHE PATENTSCHRIFT

(11) **EP 3 446 834 B1**
(45) Veröffentlichungstag und Bekanntmachung des Hinweises auf die Patenterteilung: **29.01.2020**
(21) Anmeldenummer: 17020382.2
(22) Anmeldetag: 24.08.2017
(51) Int. Cl.: B25D 11/12, A01B 1/02, B25F 5/02

(54) **ELEKTROHAMMER**
ELECTRIC HAMMER
MARTEAU ÉLECTRIQUE

(43) Veröffentlichungstag der Anmeldung: 27.02.2019
(73) Patentinhaber: Scheppach Fabrikation von Holzbearbeitungsmaschinen GmbH, 89335 Ichenhausen (DE)
(72) Erfinder: Bindhammer, Markus, 86316 Friedberg (DE)
(74) Vertreter: Munk, Ludwig

(56) Entgegenhaltungen:
- EP-A1- 2 253 430
- WO-A1-2015/017083
- WO-A2-2015/019326
- DE-A1- 10 301 378
- US-A- 4 452 316
- US-A1- 2012 312 572
- US-A1- 2013 087 352
- US-A1- 2016 229 045

## Beschreibung

Die Erfindung betrifft einen Elektrohammer gemäß dem Oberbegriff des Anspruchs 1.

Sogenannte Druckluftspaten sind Stand der Technik, siehe beispielsweise die deutsche Patentanmeldung DE 10 2005 024 586 A1. Sie erleichtern Grabarbeiten an unzugänglichen Stellen und harten Böden. Es handelt sich dabei um Drucklufthämmer mit einem druckluftbetriebenen Schlagwerk, welches ein Spatenblatt beaufschlagt.

Zum Betrieb benötigen derartige Druckluftspaten einen Kompressor mit entsprechendem Tankinhalt, um die notwendige Luftmenge zur Verfügung zu stellen. Dies schränkt den mobilen Einsatz eines Druckluftspatens vor allem im Gartenbereich stark ein. Es muss zudem eine Stromquelle für den Kompressor zur Verfügung stehen. Bei größeren Distanzen muss der Kompressor nachgeführt werden, wobei der starre Druckluftschlauch, durch den dem Druckluftspaten Druckluft zugeführt wird und der einen ausreichenden Durchmesser haben muss, die Mobilität zusätzlich einschränkt, weil er im Garten oder auf Baustellen ständig irgendwo hängen bleibt.

Weitere Ansätze zur Vereinfachung von Grabungen gehen auf ein federkraftbetätigtes Schlagwerkzeug mit Spatenaufsatz, siehe US 2012/0103644 A1, wobei hier die Werkzeugaufnahme für den Spatenaufsatz mit SDS-Kupplung versehen ist, so dass unterschiedliche Werkzeuge, wie beispielsweise Spaten oder Bruchwerkzeug auf den Spatenstiel aufgesetzt werden können.

Der Trend geht aber zu elektromotorisch angetriebenen Spaten. So zeigt die US-Patentschrift US 6,128,979 bereits eine speziell für das Entfernen von Dachziegeln ausgebildete Schaufel einerseits mit Druckluftantrieb und andererseits mit elektromotorischem Antrieb. Über die Motorantriebswelle und ein Zwischengelege-Zahnrad wird ein mit einem Kolben versehener Stab angetrieben, der auf einen Dämpfer eines Schlagwerks einwirkt. Neben dem Schaufelaufsatz ist dort auch noch ein Meißelaufsatz gezeigt, mit dem das Werkzeug einem zusätzlichen Verwendungszweck zugeführt werden kann.

Einen batteriebetriebenen Spaten zeigt und beschreibt die US 2015/0264853 A1, wobei hier die Verwendung von Litiumionenakkus genannt ist.

Die US-Patentschrift US 8,544,910 B1 zeigt und beschreibt einen akkubetriebenen Spaten, bei dem ein Akkupack im Stiel des Spatens angeordnet ist, der einen ebenfalls im Stiel des Spatens angeordneten Elektromotor mit elektrischer Energie versorgt und über einen Ladeanschluss aufgeladen werden kann. Zum Betätigen ist ein AN-AUS-Schalter vorgesehen. Die Motorachse treibt dann über ein Zwischengelege-Zahnrad eine daran exzentrisch angelenkte, mit einer Pleuelstange verbundene Achse an, wobei die Pleuelstange unterseitig auf einen in den Stiel eingesteckten Vierkantbolzen einer auswechselbaren Schaufel schlägt. Es können unterschiedliche Schaufeln vorgesehen sein.

Während derartige Elektrohämmer mit Spatenaufsatz Grabarbeiten insgesamt vereinfachen ist ihre Handhabung noch verbesserungswürdig. Insbesondere, wenn neben Grabwerkzeugaufsätzen auch noch andere Werkzeugaufsätze wie Meißel oder Schabebleche mit dem Elektrohammer verwendet werden sollen, um neben Grabarbeiten auch noch andere Arbeiten durchzuführen, wie Abbrucharbeiten oder das Entfernen von Teppichböden, PVC-Böden, Tapeten oder Dämmplatten.

Die europäische Patentanmeldung EP 2 253 430 A1 offenbart einen Elektrohammer, welcher zum Einen einen T-förmig auf dem Werkzeugträgerschaft sitzenden T-Griff aufweist, so dass beiderseits des Werkzeugträgerschafts zwei Handgriffe für sowohl eine linke als auch eine rechte Hand eines Benutzers vorhanden sind, um den Spaten sicher zu führen. Zum Anderen weist der Elektrohammer im unteren Drittel des Werkzeugträgerschafts einen Zusatzgriffstutzen auf, welcher ein Ergreifen des Elektrohammers mit der einen Hand am T-Griff und mit der anderen Hand am Zusatzgriffstutzen erlaubt und somit eine bohrmaschinenartige Handhabung des Elektrohammers.

Es ist daher Aufgabe der vorliegenden Erfindung, bei einem Elektrohammer der vorstehenden Art die Handhabung bei verschiedenen Einsatzzwecken zu verbessern.

Diese Aufgabe wird mit den Merkmalen des Anspruchs 1 gelöst.

Gattungsgemäß weist der Elektrohammer ein mittels eines Elektromotors betätigtes Schlagwerk auf, welches in einem Werkzeugträgerschaft untergebracht ist. Auf dem Werkzeugträgerschaft sitzt zum Einen T-förmig ein T-Griff, zum Anderen ist in der unteren Hälfte, vorzugsweise Im unteren Drittel des Werkzeugträgerschafts ein Zusatzgriffstutzen am Werkzeugträgerschaft angebracht, der insbesondere zum T-Griff parallel vom Werkzeugträgerschaft absteht. Der Zusatzgriffstutzen erlaubt ein Ergreifen des Elektrohammers mit der einen Hand am T-Griff und mit der anderen Hand am Zusatzgriffstutzen und somit eine bohrmaschinenartige Handhabung des Elektrohammers bei Grabungen in hartem Untergrund oder bei Abbruch- oder Schabearbeiten, insbesondere an widerstandsfähigen Mauern oder gut verklebten PVC-Bahnen oder beim Überkopfeinsatz. Der Einsatzbereich des Elektrohammers wird dadurch gegenüber einem rein als akkubetriebener Spaten ausgebildeten Elektrohammer wesentlich erweitert.

Erfindungsgemäß ist in dem Zusatzgriffstutzen der zum Antrieb des im Werkzeugträgerschaft untergebrachten Schlagwerks vorgesehene Elektromotor angeordnet.

Vorteile ergeben sich dabei im Hinblick auf eine im vorteilhaft hohl ausgebildeten Werkzeugträgerschaft angeordnete Akkumulatoreinheit und im Hinblick auf den Antriebsstrang für das Schlagwerk des Elektrohammers. Zum Einen verbleibt im rohrartigen Werkzeugträgerschaft mehr Platz für die Akkumulatoreinheit.

Diese kann dann entsprechend größer dimensioniert werden, so dass der Elektrohammer auch bei hoher Schlagleistung lange durchhält, bevor er aufgeladen werden muss. Die Anordnung des Motors in dem vorzugsweise senkrecht vom Werkzeugträgerschaft abstehenden Zusatzgriffstutzen macht zudem Winkelgetriebe oder ähnliche Zwischengelegestufen oder Transmissionseinheiten überflüssig. Die Motorausgangswelle kann vielmehr direkt als in den Werkzeugträgerschaft hineinragende Kurbelwelle gestaltet werden, auf der ein innerhalb des Werkzeugträgerschafts reziprozierendes Pleuel aufgenommen ist, welches mit dem Schlagwerk in Verbindung steht. Dadurch ergeben sich weitere Platz-, Kosten- und Gewichtsvorteile, wobei der gewonnene Bauraum wiederum für eine Vergrößerung der Akkumulatoreinheit zur Verfügung steht, was die Standzeit des Elektrohammers bis zur nächsten Aufladung weiter nach oben treiben kann.

Ist der als Antriebseinheit dienende Elektromotor als bürstenloser Gleichstrommotor ausgeführt, wird auch der Zusatzgriffstutzen nicht zu groß, da sich diese durch ein hervorragendes Drehmoment bei kompakter Bauweise auszeichnen. Zudem sind bürstenlose Gleichstrommotoren praktisch wartungslos und elektronisch sehr gut zu steuern. Der Zusatzgriffstutzen kann dabei mit Lüftungsöffnungen versehen sein, so dass die Motorwärme besser abgeführt werden kann.

Die Akkumulatoreinheit besteht vorzugsweise aus einem Verbund aus Lithium-Ionen-Zellen oder aus einer Lithium-Polymer-Einheit, um eine möglichst hohe Energiedichte zu gewährleisten, so dass sich die Standzeit des Elektrohammers bis zur nächsten Aufladung noch weiter erhöht.

Vorteilhaft ist der Elektrohammer also geeignet zum Einsatz als akkubetriebener Spaten ausgebildet.

Dabei kann zumindest ein Schalter vorgesehen sein, über den der Elektrohammer nicht nur an- und ausgeschaltet werden kann, sondern auch auf verschiedene Betriebsmodi eingestellt werden kann. Wird beispielsweise der Schalter einmal kurz betätigt, wird die Drehzahl und damit die Schlagzahl automatisch optimiert für Grabarbeiten eingestellt, wird der Schalter zweimal hintereinander kurz betätigt, so ist die Schlagzahl optimal für Abbrucharbeiten ausgelegt, wird er dreimal hintereinander kurz betätigt, so ist die Schlagzahl optimal für Schabearbeiten konfiguriert. Weiter bevorzugt sind beide Handgriffe mit einem elektrischen oder elektronischen Schalter ausgestattet, damit der Spaten durch einen Links- oder Rechtshänder komfortabel bedient werden kann. Auch am Zusatzgriffstutzen kann ein Schalter vorgesehen sein, um auch bei bohrmaschinenartiger Handhabung des Elektrohammers eine komfortable Bedienung zu ermöglichen.

Ist zur T-förmigen Verbindung des Werkzeugträgerschafts mit den beiden Handgriffen ein auf dem Werkzeugträgerschaft aufsitzender und vorzugsweise abnehmbarer Deckel, beispielsweise in Form eines Gabelungsblocks vorgesehen ist, von dem die beiden Handgriffe abstehen, vorzugsweise daran angeschraubt sind, so wird dadurch die Montage des Elektrohammers vereinfacht, weil das Innere des Werkzeugträgerschafts auf einfache Weise zugänglich ist. Zudem kann die Akkumulatoreinheit dann im Versagensfall getauscht oder zum Aufladen entnommen werden.

Bevorzugt im Sinne eines weiter verbesserten Bedienungskomforts ist es jedoch, wenn eine Ladebuchse für die sich im Werkzeugträgerschaft befindliche Akkumulatoreinheit vorhanden ist, so dass die Akkumulatoreinheit ohne Entnahme geladen werden kann. Die Ladebuchse kann zum Staub- und Spritzwasserschutz vorteilhaft mit einer Gummikappe oder dergleichen abgedeckt sein.

Als Anbringungsort für die Ladebuchse eignet sich insbesondere dann eines der beiden freien Enden das T-Griffs, wenn eine die Steuerungshardware tragende Platine im Gabelungsblock angeordnet ist, so dass sich kurze Kabelwege ergeben.

Um seine Handhabung weiter zu erleichtern kann der Elektrohammer zudem eine Anzeigeneinrichtung aufweisen, insbesondere ein LCD- oder OLED-Display, um den Ladestand der Akkumulatoreinheit, die verbleibende Restlaufzeit unter momentaner Belastung und/oder andere Parameter anzuzeigen. Die Anzeigeneinrichtung kann wiederum an einer Oberseite des Gabelungsblocks angebracht sein, wo sie gut ablesbar ist. Zudem ergibt sich eine kurze Kabelführung zur Steuerplatine im Werkzeugträgerschaft oder im Gabelungsblock.

Zur Steuerung des Elektrohammers ist also vorteilhaft eine Steuereinheit vorgesehen, die zu ihrem Schutz vor Feuchtigkeit oder Schlägen im Inneren des Elektrohammers angeordnet ist. Die Steuereinheit weist vorteilhaft Steuerungshardware und darauf ablaufende Steuerungssoftware auf, wobei die Steuerungshardware auf einer Platine sitzt und einen oder mehrere Mikrocontroller umfasst. Befindet sich die Platine oberhalb der Akkumulatoreinheit im Werkzeugträgerschaft oder im Gabelungsblock ergeben sich wie bereits erläutert kurze Kabelwege. Die Steuereinheit kann den Elektromotor beispielsweise im Ansprechen auf die über die Schalter vorgenommenen Einstellungen, der Akkumulatoreinheit im Ansprechen auf einen Energieabzug durch den Elektromotor bzw. eine Energiezufuhr über die Ladebuchse und/oder der Anzeigeneinrichtung im Ansprechen auf einen den Ladezustand der Akkumulatoreinheit ermittelnden Ladezustandsgeber steuern.

Wenn die Werkzeugaufnahme ein SDS-Bohrerschaftsystem aufweist, wie es für schlagende und drehende Elektrowerkzeuge üblich ist, sind viele gängige und am Markt erhältliche Werkzeugaufsätze mit dem Elektrohammer kompatibel.

Weitere vorteilhafte Weiterbildungen der Erfindung sind Gegenstand der weiteren Unteransprüche und werden anhand der in den beiliegenden Figuren gezeigten Ausführungsform näher erläutert. Es zeigen:
Fig. 1 eine perspektivische Ansicht eines Elektrohammers gemäß einer vorteilhaften Ausführungsform der Erfindung;
Fig. 2 eine der Fig. 1 weitgehend entsprechende Ansicht unter Weglassung des Werkzeugträgerschafts, des T-Griffs und des Zusatzgriffstutzens; und
Fig. 3 eine Ansicht von oben, unter Weglassung des Werkzeugträgerschafts, des T-Griffs und des Zusatzgriffstutzens, auf den in den vorherigen Figuren gezeigten Elektrohammer.

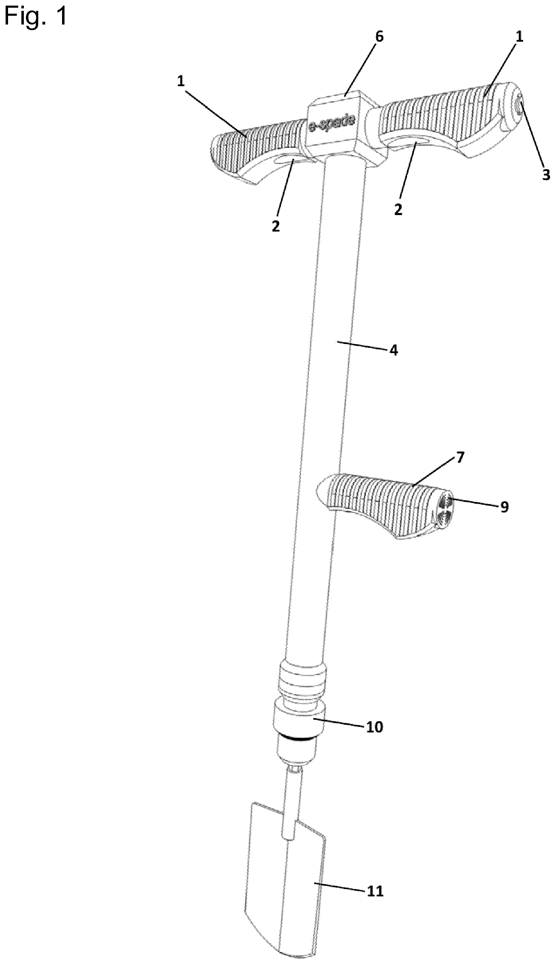

Fig. 1 zeigt den allgemeinen Aufbau eines als akkubetriebener Spaten ausgebildeten Elektrohammers gemäß einer vorteilhaften Ausführungsform der Erfindung. Im oberen Bereich weist der Spaten einen an seinem Werkzeugträgerschaft 4 T-förmig angebrachten T-Griff auf. Der T-Griff besteht aus einem auf dem Werkzeugträgerschaft 4 vorzugsweise aufgeschraubten Gabelungsblock 6, an dem links und rechts ein Handgriff 1 abstehen.

Beide Handgriffe 1 sind mit einem elektrischen oder elektronischen Schalter 2 ausgestattet. Die Schalter 2 dienen nicht nur als Ein-Ausschalter, sondern auch zum Konfigurieren des Spatens. Wird beispielsweise einer der Schalter 2 einmal kurz betätigt, wird die Drehzahl und damit die Schlagzahl automatisch optimiert für Grabarbeiten eingestellt, wird der Schalter 2 zweimal hintereinander kurz betätigt, so ist die Schlagzahl optimal für Abbrucharbeiten ausgelegt, wird er dreimal hintereinander kurz betätigt, so ist die Schlagzahl optimal für Schabearbeiten konfiguriert. Der andere Schalter 2 kann dann als EIN-AUS-Schalter dienen. Es wäre auch denkbar, beide Schalter als EIN-AUS-Schalter und als Konfigurationsschalter auszubilden, damit der Spaten sowohl durch einen Linksals auch einen Rechtshänder bequem bedient werden kann. Auch eine Totmannschaltung wäre möglich.

Am Ende des linken oder rechten Handgriffes 1 ist eine Ladebuchse 3 für sich im Werkzeugträgerschaft bzw. Hauptrohr 4 befindlichen Akku-Zellen einer Akkumulatoreinheit bzw. eines Akkus 5 angebracht. Zum Staub- und Spritzwasserschutz ist die Ladebuchse 3 mit einer Gummikappe versehen. Im Gabelungsblock 6 kann auf der Oberseite ein LCD- oder OLED-Display oder eine sonstige Anzeigeneinrichtung angebracht sein, um den Ladestand des Akkus 5 oder die verbleibende Restlaufzeit unter momentaner Belastung oder andere Parameter anzuzeigen.

Im unteren Drittel des Werkzeugträgerschafts 4 ist ein Zusatzgriffstutzen 7 angebracht. Dieser beinhaltet einen als Antriebseinheit dienenden Elektromotor 8, vorzugsweise einen bürstenlosen Gleichstrommotor 8. Um für die notwendige Wärmeabfuhr zu sorgen, ist dass Ende des Zusatzgriffstutzens 7 mit Lüftungsöffnungen 9 versehen.

Am unteren Ende des Werkzeugträgerschafts 4 befindet sich eine Werkzeugaufnahme 10, in der ein als Spatenblatt 11 ausgebildeter Werkzeugaufsatz eingesteckt ist. Dort kann jedoch auch ein anderer Werkzeugaufsatz fixiert werden, z.B. ein als Abbruchmeißel oder PVC-Schaber ausgebildeter Werkzeugaufsatz, solange er in die Werkzeugaufnahme passt. Die Werkzeugaufnahme 10 kann hexagonal oder mit dem für schlagende und drehende Elektrowerkzeuge üblichen SDS-Bohrerschaftsystem ausgestattet sein.

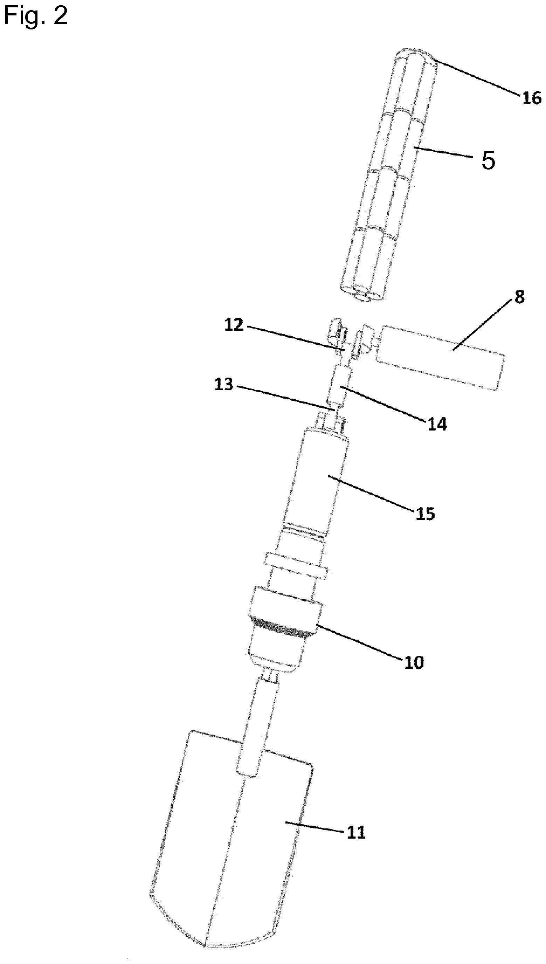

Fig. 2 zeigt die inneren Hauptkomponenten des akkubetriebenen Spatens. Die Akkumulatoreinheit 5 kann als ein Akkupack mit beispielsweise 4 x 4 herkömmlichen Lithium-Ionen-Rundzellen ausgebildet sein. Herkömmliche Lithium-Ionen-Rundzellen sind relativ kostengünstig. Ein als Antriebseinheit dienender Elektromotor 8 kann als bürstenloser Gleichstrommotor ausgeführt sein. Wird dagegen aus Kostengründen ein gewöhnlicher Gleichstrommotor verwendet, so kann dieser nach Möglichkeit mit einem optischen, Hall-Effekt- oder magnetoresistiven Drehgeber ausgestattet sein, um ständig die aktuelle Drehzahl zu erfassen und diese gegebenenfalls anzupassen.

Die Elektromotor 8 kann auf direktem Wege einen Exzenter 12 antreiben, nämlich eine als Kurbelwelle ausgebildete Motorausgangswelle, um die Drehbewegung in eine Längsbewegung umzuwandeln. Die beiden Achsen der U-förmigen Kurbelwelle bzw. des Exzenters 12, wovon eine die Motorachse darstellt und die andere eine Lagerachse für eine Pleuelstange 13, können jeweils kugelgelagert sein.

Die Pleuelstange 13 ist vorteilhaft mit einem Stoßdämpfer 14 ausgestattet, um Beschädigungen vorzubeugen. Die Pleuelstange 13 ist mit dem Schlagwerk 15 verbunden. Dieses übt den notwendigen Impuls auf die Werkzeugaufnahme 10 aus, die beweglich gelagert ausgeführt ist.

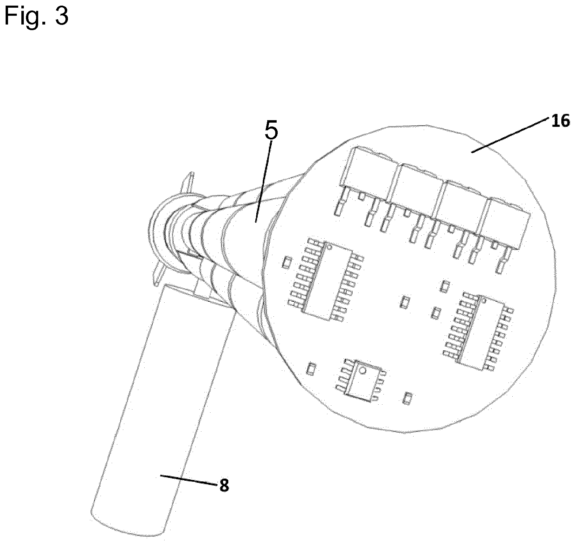

Die gesamte Steuerung des akkubetriebenen Spatens wird durch einen oder mehrere Mikrocontroller übernommen. Die Steuerung sitzt auf einer Platine 16 über dem Akku 5, wie in Fig. 3 gezeigt. Die Platine befindet sich dabei im Gabelungsblock 6, so dass genügend Platz für die Verkabelung vorhanden ist.

Abwandlungen und Modifikationen der gezeigten Ausführungsform sind im Rahmen der Ansprüche möglich.

## Patentansprüche

1. Handgeführter Elektrohammer mit einer Griffanordnung auf einem Werkzeugträgerschaft (4), in dem ein mittels eines Elektromotors (8) betätigtes Schlagwerk (15) untergebracht ist und an dessen unterem Ende eine Werkzeugaufnahme (10) angeordnet ist, die zur Aufnahme eines als Spatenblatt (11) ausgebildeten Werkzeugaufsatzes und zur Aufnahme zumindest eines weiteren Werkzeugaufsatzes geeignet ist, insbesondere eines Abbruchmeißels oder eines PVC-Schabers, wobei die Griffanordnung als T-förmig auf dem Werkzeugträgerschaft (4) sitzender T-Griff ausgebildet ist, so dass beiderseits des Werkzeugträgerschafts (4) zwei Handgriffe (1) für sowohl eine linke als auch eine rechte Hand eines Benutzers vorhanden ist, wobei in der unteren Hälfte, vorzugsweise Im unteren Drittel des Werkzeugträgerschafts (4) ein Zusatzgriffstutzen (7) am Werkzeugträgerschaft (4) angebracht ist, insbesondere zum T-Griff (1) parallel vom Werkzeugträgerschaft (4) abstehend, welcher ein Ergreifen des Elektrohammers mit der einen Hand am T-Griff (1) und mit der anderen Hand am Zusatzgriffstutzen (7) erlaubt,
**dadurch gekennzeichnet, dass**
der Zusatzgriffstutzen (7) den Elektromotor (8) beinhaltet, vorzugsweise einen bürstenlosen Gleichstrommotor (8).

2. Elektrohammer nach Anspruch 1, **dadurch gekennzeichnet, dass** der Elektrohammer einen Satz von Werkzeugaufsätzen umfasst, der den als Spatenblatt (11) ausgebildeten Werkzeugaufsatz enthält, sowie zumindest einen weiteren Werkzeugaufsatz, beispielsweise einen als Abbruchmeißel und/oder PVC-Schaber ausgebildeten Werkzeugaufsatz

3. Elektrohammer nach Anspruch 1 oder 2, **dadurch gekennzeichnet, dass** eine zum Betrieb des Elektrohammers dienende Akkumulatoreinheit (5) im Werkzeugträgerschaft (4) untergebracht ist.

4. Elektrohammer nach Anspruch 1, 2 oder 3, **dadurch gekennzeichnet, dass** der Elektrohammer geeignet zum Einsatz als akkubetriebener Spaten ausgebildet ist.

5. Elektrohammer nach einem der vorhergehenden Ansprüche, **dadurch gekennzeichnet, dass** der Zusatzgriffstutzen (7) vorzugsweise an seinem freien Ende mit Lüftungsöffnungen (9) versehen ist.

6. Elektrohammer nach einem der vorhergehenden Ansprüche, **dadurch gekennzeichnet, dass** der Elektromotor eine als Kurbelwelle (12) ausgebildete Ausgangswelle aufweist, welche in den Werkzeugträgerschaft (4) hineinragt und auf deren exzentrisch zur Motorachse verlaufenden Kurbelachse eine Pleuelstange (13) drehbeweglich und vorzugsweise kugelgelagert aufgenommen ist, welche mit dem Schlagwerkwerk (15) verbunden und insbesondere mit einem Stoßdämpfer (14) versehen ist.

7. Elektrohammer nach einem der vorhergehenden Ansprüche, **dadurch gekennzeichnet, dass** das Schlagwerk (15) die Werkzeugaufnahme (10) beaufschlagt, welche beweglich am Werkzeugträgerschaft (4) gelagert ist.

8. Elektrohammer nach Anspruch 3, **dadurch gekennzeichnet, dass** die Akkumulatoreinheit (5) aus mehreren Lithium-Ionen-Zellen, vorzugsweise handelsüblichen Rundzellen, oder aus einer Lithium-Polymer-Einheit besteht.

9. Elektrohammer nach einem der vorhergehenden Ansprüche, **dadurch gekennzeichnet, dass** zur T-förmigen Verbindung des Werkzeugträgerschafts (4) mit den beiden Handgriffen (1) ein auf dem Werkzeugträgerschaft (4) aufsitzender, vorzugsweise aufgeschraubter Gabelungsblock (6) vorgesehen ist, von dem die beiden Handgriffe (1) abstehen, vorzugsweise daran angeschraubt sind.

10. Elektrohammer nach einem der vorhergehenden Ansprüche, **dadurch gekennzeichnet, dass** die beiden Handgriffe (1) und vorzugsweise der Zusatzgriffstutzen (7) jeweils mit einem elektrischen oder elektronischen Schalter (2) ausgestattet sind, welche Schalter (2) zum Ein-Ausschalten und vorzugsweise zum Einstellen der Betriebsweise des Elektrohammers als Spaten oder anderes Werkzeug, z.B. Meißel oder Schaber konfiguriert sind.

11. Elektrohammer nach Anspruch 3, **dadurch gekennzeichnet, dass** am freien Ende des linken oder rechten Handgriffs (1) eine Ladebuchse (3) für die sich im Werkzeugträgerschaft (4) befindliche Akkumulatoreinheit (5) angebracht ist, wobei die Ladebuchse (3) vorzugsweise mit einer Gummikappe versehen ist.

12. Elektrohammer nach Anspruch 3, **dadurch gekennzeichnet, dass** der Elektrohammer eine Anzeigeneinrichtung aufweist, insbesondere ein LCD- oder OLED-Display, um den Ladestand der Akkumulatoreinheit, die verbleibende Restlaufzeit unter momentaner Belastung und/oder andere Parameter anzuzeigen, wobei die Anzeigeneinrichtung vorzugsweise an einer Oberseite eines Gabelungsblocks (6) angebracht ist.

13. Elektrohammer nach Anspruch 3 oder 12, **dadurch gekennzeichnet, dass** zur Steuerung des Elektrohammers, insbesondere des Elektromotors im Ansprechen auf die über Schalter (2) vorgenommenen Einstellungen, der Akkumulatoreinheit (5) im Ansprechen auf einen Energieabzug durch den Elektromotor bzw. eine Energiezufuhr über eine Ladebuchse (3) und/oder der Anzeigeneinrichtung im Ansprechen auf einen den Ladezustand der Akkumulatoreinheit (5) ermittelnden Ladezustandsgeber eine Steuereinheit (16) vorgesehen ist, die im Inneren des Elektrohammers, vorzugsweise oberhalb der Akkumulatoreinheit (5) angeordnet ist.

14. Elektrohammer nach Anspruch 13, **dadurch gekennzeichnet, dass** die Steuereinheit (16) Steuerungshardware und darauf ablaufende Steuerungssoftware aufweist, wobei die Steuerungshardware auf einer Platine (16) sitzt und einen oder mehrere Mikrocontroller umfasst, und wobei die Platine (16) vorzugsweise im Werkzeugträgerschaft oder in einem Gabelungsblock (6) angeordnet ist.

15. Elektrohammer nach einem der vorhergehenden Ansprüche, **dadurch gekennzeichnet, dass** die Werkzeugaufnahme (10) ein SDS-Bohrerschaftsystem aufweist.

## Claims

1. Hand-held electric hammer with a handle arrangement on a tool carrier shank (4) in which a striking mechanism (15) actuated by means of an electric motor (8) is accommodated and at the lower end of which a tool holder (10) is arranged, which is suitable for receiving a tool attachment designed as a spade blade (11) and for receiving at least one further tool attachment, in particular a demolition chisel or a PVC scraper, wherein the handle arrangement is designed as a T-shaped T-handle seated on the tool carrier shank (4), so that two handles (1) for both a left and a right hand of a user are provided on both sides of the tool carrier shank (4), and wherein an additional handle stub (7) being attached to the tool carrier shank (4) in the lower half, preferably in the lower third of the tool carrier shank (4), in particular protruding in parallel with the T-handle (1) from the tool carrier shank (4), which permits the electric hammer to be gripped with one hand on the T-handle (1) and with the other hand on the additional handle stub (7), **characterized in that**
the additional handle stub (7) houses the electric motor (8), preferably a brushless DC motor (8).

2. An electric hammer according to claim 1, **characterized in that** the electric hammer comprises a set of tool attachments containing the tool attachment formed as a spade blade (11) and at least one further tool attachment, for example a tool attachment formed as a demolition chisel and/or PVC scraper.

3. An electric hammer according to Claim 1 or 2, **characterized in that** an accumulator unit (5) serving to operate the electric hammer is accommodated in the tool shank (4).

4. An electric hammer according to claim 1, 2 or 3, **characterized in that** the electric hammer is designed for use as a battery-powered spade.

5. An electric hammer according to one of the preceding claims, **characterized in that** the additional handle stub (7) is preferably provided with ventilation openings (9) at its free end.

6. An electric hammer according to one of the preceding claims, **characterized in that** the electric motor has an output shaft designed as a crankshaft (12) which projects into the tool carrier shank (4) and on whose crank axis extending eccentrically to the motor axis a connecting rod (13) is received in a rotationally movable and preferably ball-bearing manner, which connecting rod is connected to the striking mechanism (15) and in particular is provided with a shock absorber (14).

7. An electric hammer according to one of the preceding claims, **characterized in that** the striking mechanism (15) acts on the tool holder (10), which is movably mounted on the tool carrier shank (4).

8. An electric hammer according to claim 3, **characterized in that** the accumulator unit (5) consists of several lithium-ion cells, preferably commercial round cells, or of a lithium-polymer unit.

9. An electric hammer according to one of the preceding claims, **characterized in that** for the T-shaped connection of the tool carrier shank (4) with the two handles (1), a preferably screwed-on bifurcation block (6) is provided which rests on the tool carrier shank (4) and from which the two handles (1) project and preferably are screwed on it.

10. An electric hammer according to one of the preceding claims, **characterized in that** the two handles (1) and preferably the additional handle stub (7) are each equipped with an electric or electronic switch (2), which switches (2) are configured for switching on/off and preferably for setting the mode of operation of the electric hammer as a spade or another tool, e.g. a chisel or scraper.

11. An electric hammer according to claim 3, **characterized in that** a charging socket (3) for the accumulator unit (5) located in the tool carrier shank (4) is arranged at the free end of the left or right handle (1), the charging socket (3) preferably being provided with a rubber cap.

12. An electric hammer according to claim 3, **characterized in that** the electric hammer has a display device, in particular an LCD or OLED display, for indicating the charge level of the accumulator unit, the remaining running time under current load and/or other parameters, the display device preferably being mounted on an upper side of the bifurcation block (6).

13. An electric hammer according to claim 3 or 12, **characterized in that** for controlling the electric hammer, in particular for controlling the electric motor in response to the settings made via the switches (2), the accumulator unit (5) in response to an energy take-off by the electric motor or an energy supply by the charging socket (3) and/or the display device (5) in response to a charging state sensor determining the charging state of the accumulator unit (5), a control unit (16) is provided, which is arranged inside the electric hammer, preferably above the accumulator unit (5).

14. An electric hammer according to claim 13, **characterized in that** the control unit (16) has control hardware and control software running thereon, the control hardware sitting on a circuit board (16) and comprising one or more microcontrollers, and the circuit board (16) preferably being arranged in the tool carrier shank or in the bifurcation block (6).

15. An electric hammer according to one of the preceding claims, **characterized in that** the tool holder (10) comprises an SDS drill shank system.

## Revendications

1. Marteau électrique guidé à la main, comprenant un ensemble de poignée sur une tige de porte-outils (4) qui loge un mécanisme à percussion (15) actionné au moyen d'un moteur électrique (8) et à l'extrémité inférieure de laquelle est agencé un logement d'outil (10) qui est apte à recevoir un élément d'outil rapporté réalisé en tant que lame de bêche (11) et à recevoir au moins un autre élément d'outil rapporté, en particulier un ciseau de démolition ou un grattoir en PVC, dans lequel ledit ensemble de poignée est conçu en tant que poignée en T placée en T sur la tige de porte-outils (4) de sorte que deux poignées (1) pour et une main gauche et une main droite d'un utilisateur sont présentes de part et d'autre de la tige de porte-outils (4), dans lequel un manchon de poignée supplémentaire (7) est monté dans la moitié inférieure, de préférence dans le tiers inférieur de la tige de porte-outils (4), en particulier en faisant saillie de la tige de porte-outils (4) parallèlement à la poignée en T (1), celui-ci permet de saisir le marteau électrique avec une main placée sur la poignée en T (1) et l'autre main placée sur ledit manchon de poignée supplémentaire (7),
**caractérisé par le fait que**
le manchon de poignée supplémentaire (7) comprend le moteur électrique (8), de préférence un moteur à courant continu (8) exempt de balais.

2. Marteau électrique selon la revendication 1, **caractérisé par le fait que** le marteau électrique comprend un jeu d'éléments d'outil rapportés qui comprend ledit élément d'outil rapporté réalisé en tant que lame de bêche (11), ainsi qu'au moins un autre élément d'outil rapporté, par exemple un élément d'outil rapporté conçu en tant que ciseau de démolition et/ou comme grattoir en PVC.

3. Marteau électrique selon la revendication 1 ou 2, **caractérisé par le fait que** ladite tige de porte-outils (4) loge une unité d'accumulateur (5) qui sert au fonctionnement du marteau électrique.

4. Marteau électrique selon la revendication 1, 2 ou 3, **caractérisé par le fait que** le marteau électrique est réalisé de manière à être adapté pour être utilisé en tant que bêche fonctionnant sur accumulateur.

5. Marteau électrique selon l'une quelconque des revendications précédentes, **caractérisé par le fait que** ledit manchon de poignée supplémentaire (7) est muni, de préférence à son extrémité libre, d'orifices de ventilation (9).

6. Marteau électrique selon l'une quelconque des revendications précédentes, **caractérisé par le fait que** le moteur électrique présente un arbre de sortie qui est réalisé en tant que vilebrequin (12) et fait saillie dans la tige de porte-outils (4) et sur l'arbre-manivelle duquel qui s'étend de façon excentrique à l'axe du moteur est reçue une bielle (13) de manière mobile en rotation et, de préférence, par roulement à billes, qui est reliée au mécanisme à percussion (15) et, en particulier, est pourvue d'un amortisseur de choc (14).

7. Marteau électrique selon l'une quelconque des revendications précédentes, **caractérisé par le fait que** ledit mécanisme à percussion (15) agit sur le logement d'outil (10) qui est supporté de manière mobile sur la tige de porte-outils (4).

8. Marteau électrique selon la revendication 3, **caractérisé par le fait que** l'unité d'accumulateur (5) est constituée d'une pluralité de cellules lithium-ion, de préférence de cellules rondes disponibles dans le commerce, ou d'une unité lithium polymère.

9. Marteau électrique selon l'une quelconque des revendications précédentes, **caractérisé par le fait que**, pour la liaison en T de la tige de porte-outils (4) aux deux poignées (1), on prévoit un bloc de bifurcation (6) qui repose sur la tige de porte-outils (4), de préférence est vissé, et duquel font saillie les deux poignées (1), de préférence y sont vissées.

10. Marteau électrique selon l'une quelconque des revendications précédentes,
**caractérisé par le fait que** les deux poignées (1) et de préférence ledit manchon de poignée supplémentaire (7) sont équipés chacun d'un interrupteur électrique ou électronique (2), lesquels interrupteurs (2) sont configurés pour allumer et éteindre et, de préférence, pour régler le mode de fonctionnement du marteau électrique en tant que bêche ou comme autre outil, par exemple ciseau ou grattoir.

11. Marteau électrique selon la revendication 3, **caractérisé par le fait qu'**à l'extrémité libre de la poignée (1) gauche ou droite est montée une prise femelle de charge (3) pour l'unité d'accumulateur (5) se trouvant à l'intérieur de la tige de porte-outils (4), dans lequel ladite prise femelle de charge (3) est pourvue de préférence d'un capuchon en caoutchouc.

12. Marteau électrique selon la revendication 3, **caractérisé par le fait que** le marteau électrique comprend un dispositif d'affichage, en particulier un affichage à cristaux liquide ou DELO pour afficher l'état de charge de l'unité d'accumulateur, le temps restant sous charge actuelle et/ou d'autres paramètres, dans lequel ledit dispositif d'affichage est monté de préférence sur une face supérieure d'un bloc de bifurcation (6).

13. Marteau électrique selon la revendication 3 ou 12, **caractérisé par le fait que**, pour commander le marteau électrique, en particulier le moteur électrique en réponse aux réglages effectués par l'intermédiaire d'interrupteurs (2), de l'unité d'accumulateur (5) en réponse à un prélèvement d'énergie par le moteur électrique ou bien à une alimentation en énergie via une prise femelle de charge (3), et/ou du dispositif d'affichage en réponse à un capteur d'état de charge détectant l'état de charge de l'unité d'accumulateur (5), une unité de commande (16) est prévue qui est disposée à l'intérieur du marteau électrique, de préférence au-dessus de l'unité d'accumulateur (5).

14. Marteau électrique selon la revendication 13, **caractérisé par le fait que** ladite unité de commande (16) comprend du matériel de commande ainsi que du logiciel de commande exécuté sur le matériel de commande, dans lequel le matériel de commande se trouve sur une carte de circuits imprimés (16) et comprend un ou plusieurs micro-contrôleurs, et dans lequel la carte de circuits imprimés (16) est disposée de préférence à l'intérieur de la tige de porte-outils ou d'un bloc de bifurcation (6).

15. Marteau électrique selon l'une quelconque des revendications précédentes,
**caractérisé par le fait que** le logement d'outil (10) présente un système de tige de foret SDS.
